# EUROPEAN PATENT SPECIFICATION

(11) **EP 3 499 403 B1**
(45) Date of publication and mention of the grant of the patent: **20.01.2021**
(21) Application number: 18212619.3
(22) Date of filing: 14.12.2018
(51) Int. Cl.: G06K 7/10, G07G 1/00

(54) **COMMODITY INFORMATION READING APPARATUS**
WARENINFORMATIONSLESEVORRICHTUNG
APPAREIL DE LECTURE D'INFORMATIONS SUR DES MARCHANDISES

(30) Priority: 15.12.2017 JP 2017240895
(43) Date of publication of application: 19.06.2019
(73) Proprietor: Toshiba TEC Kabushiki Kaisha, 141-8562 Tokyo (JP)
(72) Inventor: Suzuki, Shigeaki, Tokyo, 141-8562 (JP)
(74) Representative: Hoffmann Eitle

(56) References cited:
- US-A1- 2007 040 024
- US-A1- 2011 080 268
- US-A1- 2015 088 677
- US-B1- 7 150 395

## Description

### FIELD

Embodiments described herein relate generally to a commodity information reading apparatus.

### BACKGROUND

In the related art, a wireless tag storing commodity identification information is attached to a commodity and a commodity information reading apparatus executes a sales registration processing for selling the commodity based on wireless tag information received from the wireless tag in response to a signal transmitted from the commodity information reading apparatus. Such a commodity information reading apparatus transmits a reading signal to wireless tags respectively attached to a plurality of commodities placed in one place, and receives the wireless tag information of the wireless tag that responded.

However, if there is a commodity of a container of material that does not allow radio waves to pass through such as metal among the placed commodities (hereinafter referred to as "non-passing commodity") , there is a possibility that the signal transmitted from the commodity information reading apparatus or the wireless tag information transmitted from the wireless tag that responded, is blocked by the non-passing commodity. When the signal or the information is blocked, the commodity information reading apparatus may not be able to receive the wireless tag information of all the placed commodities. Therefore, an operator needs to confirm whether the number of pieces of the wireless tag information received by the commodity information reading apparatus coincides with the number of the commodities placed on sale.

US 20110080268 A1 relates to a sales data processing apparatus including a commodity-information reading section configured to read, from a scanner, commodity information included in a code symbol attached to a commodity and a tag invalidating section configured to invalidate an RFID tag attached to the commodity, when the commodity-information reading section reads the commodity information.

US 20070040024 A1 relates to a commodity information registering apparatus which registers commodity information while a commodity is moved, comprising a radio tag reading section which reads a radio tag within a first field to acquire commodity identification information stored in the radio tag, an optical reading section which reads a code symbol within a second field to acquire commodity identification information described in the code symbol, and a registering section which registers one of the commodity information corresponding to the commodity identification information acquired from the radio tag and the commodity information corresponding to the commodity identification information acquired from the code symbol.

US 20150088677 A1 relates to a transaction system and method in which a customer operates a mobile device, such as a smart phone, to interact with a transaction server during a transaction at a checkout station while scanning items. An example method includes establishing by the server a connection with a mobile communication device, receiving by the server item descriptions associated with items purchased from a code reader, sending by the server prices of the items and the item descriptions to the mobile communication device for display by the mobile communication device, and receiving payment by the server from the customer for the items.

US 7150395 B1 relates to a method of identifying items. The method includes obtaining first item identification information from RFID labels on grouped first items, obtaining second item identification information from bar code labels on ungrouped second items, determining prices of the first and second items from the first and second item identification information, and processing payment for the first and second items.

### SUMMARY OF THE INVENTION

One of the objects of the present invention is to improve prior art techniques and overcome at least some of the prior art problems as for instance above illustrated. The object of the invention is achieved by the subject-matter of the independent claims. Advantageous embodiments are defined in the dependent claims. Further examples are provided for facilitating the understanding of the invention.

According to a first example, it is provided a commodity information reading apparatus comprising a first support configured to support a commodity to be read; and a wireless tag receiver located at an upper part of the first support , and including an antenna configured to transmit and receive a signal, the wireless tag receiver configured to receive first commodity identification information identifying the commodity that responds to the signal transmitted from the antenna, from a wireless tag attached to the commodity moved within a predetermined receivable area provided in the upper part of the first support.

Optionally, the apparatus according to the fist example further comprises a code reader provided in a vicinity of the wireless tag receiver and configured to read second commodity identification information identifying the commodity, and attached to the commodity moved within a predetermined readable area provided in the upper part of the first support, wherein the receivable area and the readable area overlap each other at least partially.

Optionally, the apparatus according to the first example further comprises a second support configured to support the commodity that passed through the receivable area and provided on a side opposite to the first support, the first support and the second support sandwiching the wireless tag receiver.

Optionally, the apparatus according to the first example further comprises a controller configured to execute a sales registration processing of the commodity based on the first commodity identification information when the wireless tag receiver receives the first commodity identification information and the code reader reads the second commodity identification information for a same commodity.

Optionally, in the apparatus according to the first example, the wireless tag receiver is configured to receive the first commodity identification information from the wireless tag attached to the commodity for which an operation for reading the second commodity identification information from the code reader is performed.

Optionally, the apparatus according to the first example further comprises a controller, wherein when the controller determines that the second commodity identification information was read by the code reader and the first commodity identification information was not received by the wireless tag receiver, the controller is configured to perform sales registration processing based on the second commodity identification information read by the code reader.

Optionally, the apparatus according to the first example further comprises a controller when the controller determines that the first commodity identification information was received by the wireless tag receiver, the controller is configured to perform sales registration processing based on the first commodity identification information received by the wireless tag receiver.

According to a second example, it is provided a method of operating a commodity information reading apparatus including a first support configured to support a commodity to be read, and a wireless tag receiver located at an upper part of the first support, and including an antenna configured to transmit and receive a signal, the method comprising receiving, via the wireless tag receiver, first commodity identification information identifying the commodity that responds to the signal transmitted from the antenna, from a wireless tag attached to the commodity moved within a predetermined receivable area provided in the upper part of the first support.

Optionally, the method according to the second example further comprises reading, via a code reader provided in a vicinity of the wireless tag receiver, second commodity identification information identifying the commodity, and attached to the commodity moved within a predetermined readable area provided in the upper part of the first support, wherein the receivable area and the readable area overlap each other at least partially.

Optionally, in the method according to the second example, the commodity information reading apparatus further comprises a second support configured to support the commodity that passed through the receivable area and provided on a side opposite to the first support, the first support and the second support sandwiching the wireless tag receiver.

Optionally, the method according to the second example further comprises executing a sales registration processing of the commodity based on the first commodity identification information when the wireless tag receiver receives the first commodity identification information and the code reader reads the second commodity identification information for a same commodity.

Optionally, the method according to the second example receives, via the wireless tag receiver, the first commodity identification information from the wireless tag attached to the commodity for which an operation for reading the second commodity identification information from the code reader is performed.

Optionally, the method according to the second example further comprises, when it is determined that the second commodity identification information was read by the code reader and the first commodity identification information was not received by the wireless tag receiver, performing sales registration processing based on the second commodity identification information read by the code reader.

Optionally, the method according to the second example further comprises, when it is determined that the first commodity identification information was received by the wireless tag receiver, performing sales registration processing based on the first commodity identification information received by the wireless tag receiver.

### DESCRIPTION OF THE DRAWINGS

FIG. 1 is a perspective view showing an appearance of a self-checkout POS terminal according to at least one embodiment.
FIG. 2 is a block diagram showing a hardware configuration of the self-checkout POS terminal.
FIG. 3 is a memory map showing a part of a commodity master of the self-checkout POS terminal.
FIG. 4 is a functional block diagram showing a functional configuration of the self-checkout POS terminal.
FIG. 5 is a flowchart showing control processing in the self-checkout POS terminal.

### DETAILED DESCRIPTION

An object of embodiments is to provide a commodity information reading apparatus that can reliably receive wireless tag information from a wireless tag attached to a commodity.

In general, according to at least one embodiment, there is provided a commodity information reading apparatus including a first placing unit configured to place a commodity to be read, and a wireless tag receiving unit (receiver) that is located at an upper part of the first placing unit (support), includes an antenna for transmitting and receiving a signal, and is configured to receive first commodity identification information identifying the commodity that responds to the signal transmitted from the antenna, from a wireless tag attached to the commodity moved within a predetermined receivable area provided in the upper part of the first placing unit from the first placing unit.

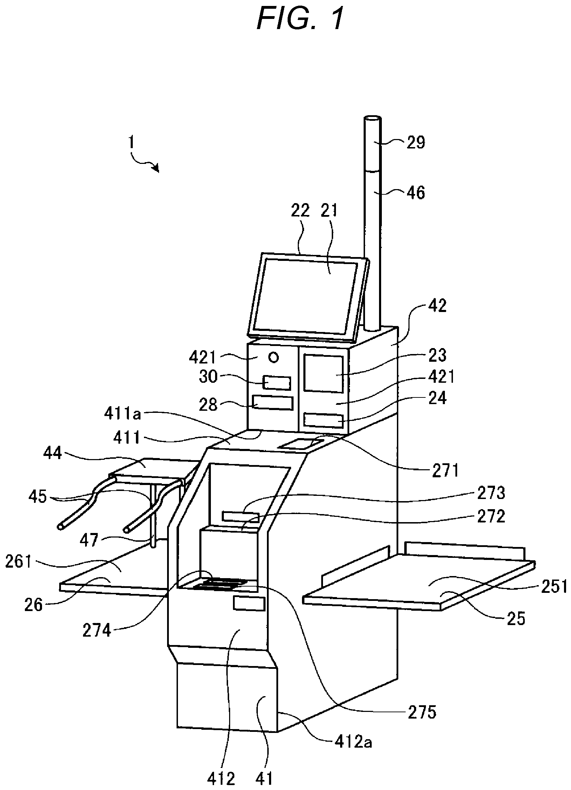

Hereinafter, with reference to the attached drawings of FIGS. 1 to 5, a commodity information reading apparatus according to at least one embodiment will be described. In the at least one embodiment, a self-checkout point of sales (POS) terminal in which a customer performs a registration operation and an accounting operation will be described as a commodity information reading apparatus. Note that, the invention is not limited by the embodiments described below.

FIG. 1 is a perspective view showing an appearance of a self-checkout POS terminal 1. The self-checkout POS terminal 1 includes a registration unit that reads a commodity code (second commodity identification information) identifying a commodity to be purchased, and an accounting unit that performs an accounting operation based on commodity information corresponding to the read commodity code. Both the registration operation at the registration unit and the accounting operation at the accounting unit are performed by the customer. The commodity code is code information for identifying a commodity. The self-checkout POS terminal 1 executes a sales registration processing based on the registration operation performed by the customer. The self-checkout POS terminal 1 also executes an accounting processing based on the accounting operation performed by the customer.

The sales registration processing is a processing of displaying and storing commodity information such as a commodity name and a price of a corresponding commodity based on an inputted commodity code. The accounting processing is a processing of displaying a total amount for transactions based on commodity information on which the sales registration processing is performed, accounting based on a deposit received from the customer, and issuing a receipt. A transaction processing includes the sales registration processing and the accounting processing. Transaction information includes the commodity information and accounting information.

As shown in FIG. 1, the self-checkout POS terminal 1 includes a first housing 41 and a second housing 42. The first housing 41 houses a coin change machine and a bill change machine (collectively referred to as "change machine 27") and the like therein. The change machine 27 stores coins and bills deposited from the customer by denomination. The change machine 27 also pays out changes to the customer.

The first housing 41 includes a first door 411 and a second door 412 both of which can be opened and closed. The first door 411 pivots vertically about a hinge unit 411a. The second door 412 pivots horizontally about a hinge unit 412a. The first door 411 interferes with the second door 412, and in order to open the second door 412, the first door 411 needs to be opened in an upward direction. The second door 412 cannot be opened alone, when both the first door 411 and the second door 412 are closed.

As the first door 411 pivots upward, an upper inside of the first housing 41 is opened, and the change machine 27 is exposed. Also, as the second door 412 pivots rightward, a lower inside of the first housing 41 is opened, and a control device (not shown) is exposed.

The first door 411 includes a deposit slot 271, a coin output slot 273, and a receiving tray 272. The deposit slot 271 is located on an upper surface of the first door 411 and is a slot serving as an inserting port of coins for depositing in the change machine 27. The coin output slot 273 is a slot that opens a dispensing port for paying out the coins from the change machine 27. The receiving tray 272 is a tray for receiving change coins paid out from the change machine 27.

The first door 411 includes a deposit slot 274 and a withdraw slot 275. The deposit slot 274 is a slot serving as an inserting port of bills for depositing in the change machine 27. The withdraw slot 275 is a slot serving as a dispensing port for paying out change bills paid out from the change machine 27 in an upward direction.

The second housing 42 is provided on an upper portion of the first housing 41. The second housing 42 houses a code reading unit 23, a printing unit 24, a card unit 28, and a wireless tag receiving unit 30 therein. The code reading unit 23 (code reader) reads a symbol (for example, a bar code or a two-dimensional code) attached to a commodity located in a readable area that is in front of the code reading unit 23. The code reading unit 23 also optically reads a symbol attached to a commodity passing through the readable area that is a space in front of the code reading unit 23. The readable area is located at an upper part of a placing table 25 and a placing table 26, which will be described later. The code reading unit 23 acquires a commodity code identifying a commodity based on the read symbol. Hereinafter, a processing of reading a symbol and acquiring a commodity code based on the read symbol is simplified and described as "read a commodity code". The readable area is a space in a predetermined range (for example, 30 cm) in front of the code reading unit 23 (near side in FIG. 1).

The wireless tag receiving unit 30 includes a planar antenna that transmits and receives signals. The wireless tag receiving unit 30 receives wireless tag information (first commodity identification information) including a commodity code attached to a commodity by the antenna. The wireless tag receiving unit 30 radially transmits signals from the antenna toward the wireless tag. Since the signal is a weak radio wave, the signal transmitted from the wireless tag receiving unit 30 can be received only by the wireless tag which is located in front of the antenna of the wireless tag receiving unit 30, and located in a predetermined receivable area within a predetermined range (for example, 30 cm) from the wireless tag receiving unit 30. The receivable area is located at an upper part of the placing table 25 and the placing table 26, which will be described later. The signal transmitted from the wireless tag receiving unit 30 can be received only by the wireless tag that passes through inside the receivable area within the predetermined range from the wireless tag receiving unit 30. The wireless tag receiving the signal transmits the wireless tag information to the wireless tag receiving unit 30. The wireless tag information includes an individual identification number of a commodity identifying the particular commodity (individual identification numbers are different if individuals are different, even though commodities have the same commodity code) and a commodity code identifying the commodity. That is, the wireless tag information is information for identifying a commodity. The wireless tag receiving unit 30 receives the wireless tag information transmitted from the wireless tag.

Note that, a part or all of the readable area in which a symbol can be read by the code reading unit 23 and the receivable area in which signals transmitted from the wireless tag receiving unit 30 by the wireless tag can be received, overlap each other. That is, in an overlapped area, the code reading unit 23 is capable of reading a symbol and the wireless tag receiving unit 30 is capable of receiving wireless tag information.

The printing unit 24 prints commodity information and accounting information of a commodity purchased by the customer and issues a receipt. The card unit 28 reads customer identification information from, for example, an inserted credit card. The self-checkout POS terminal 1 executes the accounting processing based on the customer identification information read by the card unit 28.

The second housing 42 includes a display unit 22 at an upper portion. The display unit 22 displays commodity information of a commodity in which a registration operation is performed by the customer. The display unit 22 also displays accounting information in which the self-checkout POS terminal 1 executed an accounting processing in accordance with an accounting operation by the customer. The display unit 22 also displays a guidance for the customer to appropriately perform the registration operation and the accounting operation. In addition, the display unit 22 displays a cancellation method for a misoperation and a calling method of an attendant.

The display unit 22 includes a touch panel 21 on a surface. The touch panel 21 serves as a key. By operating the touch panel 21 at positions corresponding to various keys displayed on the display unit 22, the keys are operated.

The second housing 42 includes a cylindrical pole 46 extending to an upper portion, at a rear. At an upper end portion of the pole 46, a light emitting unit 29 that emits a light when the customer performs an operation to call an attendant is provided.

The first housing 41 includes the placing table 25 (first placing unit or first support) and the placing table 26 (second placing unit or second support) on the left side and the right side. The placing table 25 includes a first measuring unit 251. The placing table 26 includes a second measuring unit 261.

The placing table 25 is a table on which a basket containing a commodity to purchase or a commodity is placed. When the basket containing the commodity is placed on the placing table 25, the first measuring unit 251 measures a total weight of the placed basket and the commodity in the basket. When the commodity is directly placed on the placing table 25, the first measuring unit 251 measures a total weight of the placed commodities. The placing table 26 is a table on which the commodity taken out from the placing table 25 is placed. The second measuring unit 261 measures a total weight of the commodities placed on the placing table 26.

The placing table 26 includes two supporting posts 47 extending upward from an upper surface of the placing table 26, a temporary placing table 44 formed on the supporting posts 47, and two extending rods 45. The extending rod 45 is a rod on which a bag such as a plastic bag (not shown) which contains a commodity in which a commodity code is read by the code reading unit 23, is hooked. The bag is opened with a handle hooked on the extending rod 45, and a customer can easily insert the commodity. The temporary placing table 44 is a table for temporarily placing commodities (tofu or eggs) which are easily broken in shape among the commodities in which the commodity code is read by the code reading unit 23. The commodity placed on the temporary placing table 44 is put in the bag at the end.

The commodity has a symbol attached. The commodity also has a wireless tag affixed. Note that, it is preferable that the wireless tag is affixed in a vicinity of the symbol. The wireless tag is affixed in the vicinity of the symbol means that the wireless tag affixed to the commodity is affixed to a position facing a direction of the wireless tag receiving unit 30, when an operator, who is a customer, performs a symbol reading operation with the symbol attached to the commodity facing a reading window (not shown) of the code reading unit 23, for example. In at least one embodiment, both the code reading unit 23 and the wireless tag receiving unit 30 are provided on a front face 421 side. Accordingly, the wireless tag is affixed in the vicinity of the symbol means that the wireless tag is also affixed so as to face the front face 421, when the operator directs the symbol attached to the commodity to face the front face 421 so that the code reading unit 23 can read the symbol. The wireless tag need not be affixed in the vicinity of the symbol, and the wireless tag may not be affixed in the vicinity of the symbol as long as the wireless tag receiving unit 30 can receive the wireless tag information located in the receivable area when the operator takes out the commodity placed on the placing table 25 and performs a series of operations of causing the code reading unit 23 to read the symbol or when the code reading unit 23 reads the symbol of the commodity in the readable area.

The customer takes out the commodity placed on the placing table 25 and makes the commodity pass through the readable area of the front of the code reading unit 23 and the receivable area near the wireless tag receiving unit 30 to be described later. Thereafter, the customer inserts the commodity into the bag set on the placing table 26. The first measuring unit 251 measures a weight reduced when the commodity is taken out of the basket placed on the placing table 25 (that is, the weight of the taken out commodity) . The second measuring unit 261 measures a weight increased when the commodity is put on the placing table 26 (that is, the weight of the inserted commodity) . Depending on whether both weight changes are equal or not, a control unit 100, which will be described later, determines whether the customer is correctly operating.

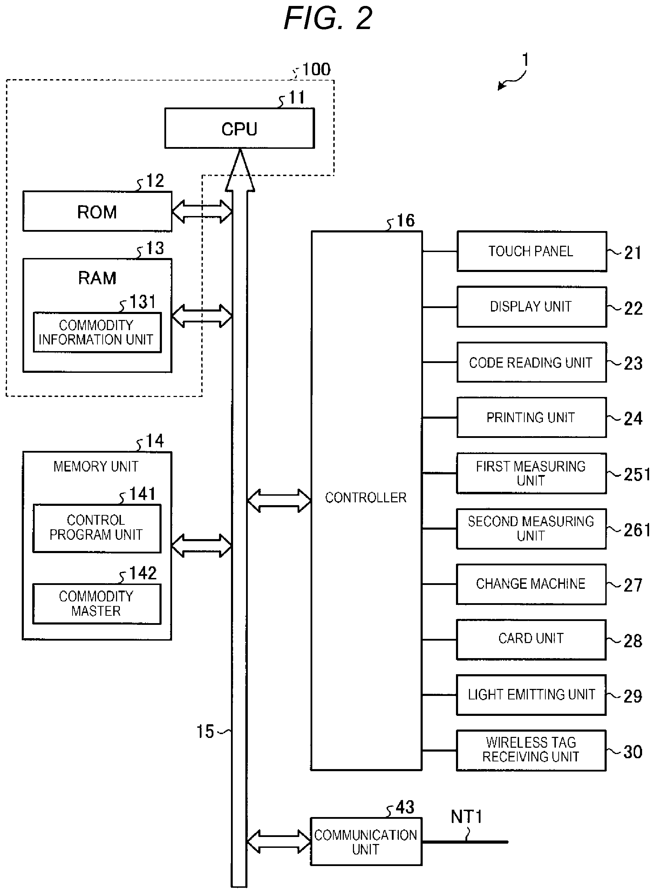

A hardware configuration of the self-checkout POS terminal 1 will be described from here. FIG. 2 is a block diagram showing the hardware configuration of the self-checkout POS terminal 1. As shown in FIG. 2, the self-checkout POS terminal 1 includes a central processing unit (CPU) 11, a read only memory (ROM) 12, a random access memory (RAM) 13, a memory unit 14, and the like. The CPU 11 is a control subject. The ROM 12 stores various programs. The RAM 13 loads various data. The memory unit 14 stores various programs. The CPU 11, the ROM 12, the RAM 13, and the memory unit 14 are connected to each other via a data bus 15. The CPU 11, the ROM 12, and the RAM 13 configure the control unit 100. That is, the control unit 100 executes a control processing to be described later by operating the CPU 11 according to a control program stored in the ROM 12 or the memory unit 14 and loaded in the RAM 13.

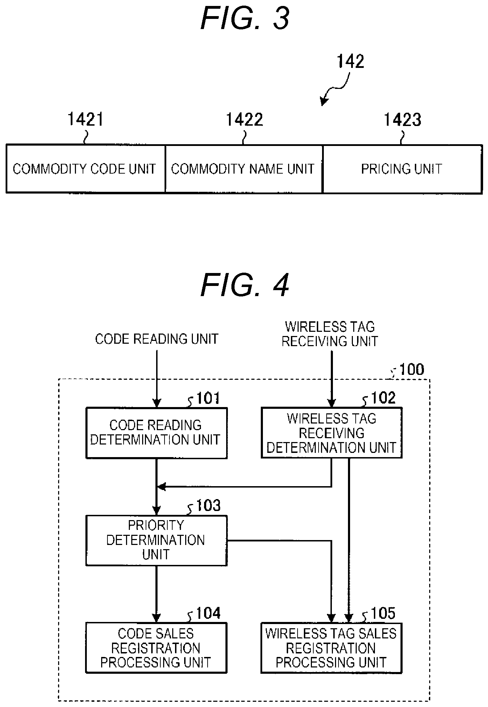

The RAM 13 has a commodity information unit 131. The commodity information unit 131 stores commodity information of a commodity performed the sales registration processing. The memory unit 14 is configured to a nonvolatile memory such as a hard disk drive (HDD) or a flash memory that retains stored information even when a power is turned off, and includes a control program unit 141 that stores a control program. The memory unit 14 includes a commodity master 142. The commodity master 142 will be described later with reference to FIG. 3.

The control unit 100 is connected to the touch panel 21, the display unit 22, the code reading unit 23, the printing unit 24, the first measuring unit 251, the second measuring unit 261, the change machine 27, the card unit 28, the light emitting unit 29, and the wireless tag receiving unit 30 via the data bus 15 and a controller 16.

The control unit 100 is connected to a communication unit 43 via the data bus 15. The communication unit 43 transmits and receives information with another self-checkout POS terminal 1 or an attendant PC or an upper server (neither is shown) via a communication line NT1.

FIG. 3 is a memory map showing a part of the commodity master 142 (storage unit). The commodity master 142 stores various kinds of information relating to the commodity. As shown in FIG. 3, the commodity master 142 includes a commodity code unit 1421, a commodity name unit 1422, and a pricing unit 1423.

The commodity code unit 1421 stores a commodity code for identifying a commodity. The commodity name unit 1422 stores a commodity name of the commodity identified by the commodity code in association with the commodity code. The pricing unit 1423 stores a price of the commodity identified by the commodity code in association with the commodity code.

A functional configuration of the self-checkout POS terminal 1 will be described from here. FIG. 4 is a functional block diagram showing the functional configuration of the self-checkout POS terminal 1. As shown in FIG. 4, by following the control program stored in the ROM 12 or the control program unit 141 of the memory unit 14, the control unit 100 (controller) functions as a code reading determination unit 101, a wireless tag receiving determination unit 102, a priority determination unit 103, a code sales registration processing unit 104, and a wireless tag sales registration processing unit 105.

The code reading determination unit 101 determines whether or not the code reading unit 23 read the commodity code.

The wireless tag receiving determination unit 102 determines whether or not the wireless tag receiving unit 30 received the wireless tag information.

The priority determination unit 103 determines whether or not the wireless tag receiving unit 30 received the wireless tag information for the same commodity and the code reading unit 23 read the commodity code. Generally, when the commodity passes through, since the wireless tag receiving unit 30 receives wireless tag information faster than the code reading unit 23 reads a commodity code, if the wireless tag receiving unit 30 received the wireless tag information at the time when the code reading unit 23 reads the commodity code, it is determined that the wireless tag receiving unit 30 received the wireless tag information on the same commodity and the code reading unit 23 read the commodity code.

When the priority determination unit 103 determines that the code reading determination unit 101 determined the commodity code was read and the wireless tag receiving determination unit 102 determined that the wireless tag information was not received, the code sales registration processing unit 104 executes the sales registration processing based on the commodity code read by the code reading unit 23. That is, based on the commodity code read by the code reading unit 23, the code sales registration processing unit 104 reads the commodity name and the price associated with the commodity code from the commodity master 142 and stores the commodity name and the price in the commodity information unit 131.

When it is determined that the wireless tag receiving unit 30 received the wireless tag information, the wireless tag sales registration processing unit 105 executes the sales registration processing based on the commodity code included in the wireless tag information received by the wireless tag receiving unit 30. That is, based on the commodity code included in the wireless tag information received by the wireless tag receiving unit 30, the wireless tag sales registration processing unit 105 reads the commodity name and the price associated with the commodity code from the commodity master 142, and stores the commodity name and the price in the commodity information unit 131. When the priority determination unit 103 determines that the code reading determination unit 101 determined the commodity code was read and the wireless tag receiving determination unit 102 determined that the wireless tag information was received, the wireless tag sales registration processing unit 105 executes the sales registration processing based on the commodity code included in the wireless tag information received by the wireless tag receiving unit 30.

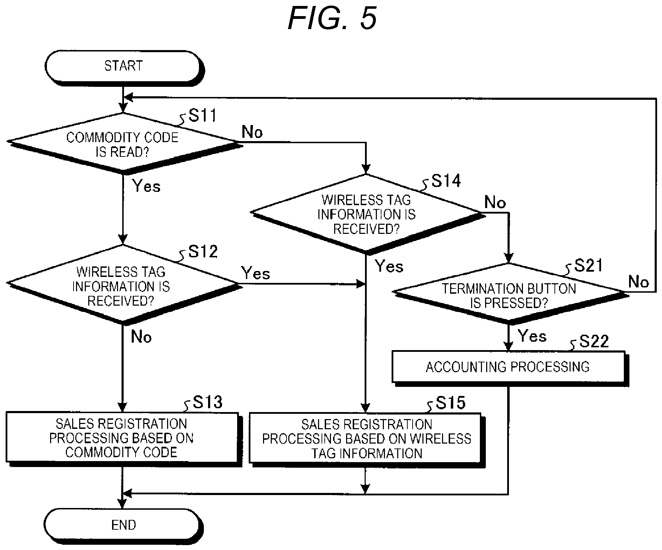

A control processing of the self-checkout POS terminal 1 will be described from here. FIG. 5 is a flowchart showing the control processing in the self-checkout POS terminal 1.

The code reading determination unit 101 determines whether or not the code reading unit 23 read the commodity code (Act 11) . When the code reading determination unit 101 determines that the code reading unit 23 did not read the commodity code (No in Act 11), the wireless tag receiving determination unit 102 determines whether or not the wireless tag receiving unit 30 received wireless tag information (Act 14).

When the priority determination unit 103 determines that the code reading determination unit 101 determined the commodity code was read (Yes in Act 11), the wireless tag receiving determination unit 102 determines whether or not the wireless tag information was received for the same commodity (Act 12). When the priority determination unit 103 determines that the wireless tag receiving determination unit 102 determined the wireless tag information was not received for the same commodity (No in Act 12), the code sales registration processing unit 104 executes the sales registration processing based on the commodity code read by the code reading unit 23 (Act 13) . Then, the control unit 100 terminates the processing.

On the other hand, when the priority determination unit 103 determines that the wireless tag receiving determination unit 102 determined the wireless tag information was received for the same commodity (Yes in Act 12), the wireless tag sales registration processing unit 105 executes the sales registration processing based on the commodity code included in the wireless tag information received by the wireless tag receiving unit 30 (Act 15) . Then, the control unit 100 terminates the processing.

When the wireless tag receiving determination unit 102 determines that the wireless tag receiving unit 30 received the wireless tag information (Yes in Act 14), the wireless tag sales registration processing unit 105 executes the sales registration processing based on the commodity code included in the wireless tag information received by the wireless tag receiving unit 30 (Act 15). That is, the control unit 100 executes the sales registration processing on a commodity that does not read a commodity code for some reason, based on the commodity code included in the wireless tag information received by the wireless tag receiving unit 30 (Act 15). Then, the control unit 100 terminates the processing.

When the wireless tag receiving determination unit 102 determines that the wireless tag receiving unit 30 did not receive the wireless tag information (No in Act 14), the control unit 100 determines whether a termination button (not shown) provided on the touch panel 21 is operated (Act 21). When the control unit 100 determines that the termination button is operated (Yes in Act 21), the control unit 100 executes the accounting processing based on the commodity information stored in the commodity information unit 131 (Act 22). Then, the control unit 100 terminates the processing. When the control unit 100 determines that the termination button is not operated (No in Act 21), the control unit 100 returns to Act 11.

According to the self-checkout POS terminal 1 of at least one embodiment, when the operator lifts up a commodity placed on the placing table 25, searches for a symbol, and performs an operation to pass through the front of the code reading unit 23 toward the code reading unit 23, the wireless tag receiving unit 30 receives the wireless tag information from the wireless tag affixed to the commodity that passed through the receivable area. Therefore, if the operator performs an operation to cause the code reading unit 23 to read the symbol attached to the commodity toward the code reading unit 23, the wireless tag information corresponding to the commodity can be received from the wireless tag affixed to the commodity.

According to the self-checkout POS terminal 1 of at least one embodiment, since the readable area and the receivable area are partially overlapped or entirely overlapped, if the operator performs an operation to read the symbol attached to the commodity in an overlapped area, the wireless tag information corresponding to the commodity can be received from the wireless tag attached to the commodity at the same time.

According to the self-checkout POS terminal 1 of the embodiment, when the code reading unit 23 read the commodity code and the wireless tag receiving unit 30 received the wireless tag information for the same commodity, the sales registration processing is executed based on the wireless tag information received by the wireless tag receiving unit 30. Therefore, management of each particular commodity can be performed based on the individual identification number included in the wireless tag information.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

For example, in at least one embodiment, the self-checkout POS terminal 1 is described as an example of a commodity information reading apparatus. However, without being limited to this, for example, a commodity information registration apparatus of a semi self-checkout POS including a commodity information registration apparatus operated by a store clerk and an accounting apparatus operated by a customer may be used as the commodity information reading apparatus. A commodity sales data processing apparatus for the store clerk to perform a sales registration operation and an accounting operation may be used as the commodity information reading apparatus.

In at least one embodiment, the code reading unit 23 optically reads the symbol to acquire the commodity code. However, without being limited to this, the code reading unit 23 may capture a symbol and acquire a commodity code based on the captured symbol.

In at least one embodiment, the commodity code is described as an example of the second commodity identification information. However, without being limited to this, the second commodity identification information may be information other than a code as long as the information identifies a commodity.

At least one embodiment includes the code reading unit 23 for reading the commodity code and the wireless tag receiving unit 30 for receiving the wireless tag information. However, without being limited to this, the code reading unit 23 is not an essential configuration. In short, the wireless tag receiving unit 30 may receive wireless tag information when the operator performs an operation to hold a symbol over the wireless tag receiving unit 30.

Note that, a program executed by the self-checkout POS terminal 1 of the embodiment is provided by being recorded in a computer-readable recording medium such as a CD-ROM, a flexible disk (FD), a CD-R, a digital versatile disc (DVD) or the like in a file in installable format or executable format.

The program executed by the self-checkout POS terminal 1 of at least one embodiment may be stored on a computer connected to a network such as the Internet and provided by being downloaded via the network. The program executed by the self-checkout POS terminal 1 of at least one embodiment may be provided or distributed via the network such as the Internet.

In addition, the program executed by the self-checkout POS terminal 1 of at least one embodiment may be provided by being incorporated in a ROM or the like in advance.

## Claims

1. A commodity information reading apparatus comprising:
a first support (25) configured to support a commodity to be read; and
a wireless tag receiver (30) located at an upper part of the first support, and including an antenna configured to transmit and receive a signal,
the wireless tag receiver (30) being configured to receive first commodity identification information identifying the commodity from a wireless tag that responds to the signal transmitted from the antenna, the wireless tag being attached to the commodity moved within a predetermined receivable area provided in the upper part of the first support (25),
a code reader (23) provided in a vicinity of the wireless tag receiver (30) and configured to read second commodity identification information identifying the commodity from a symbol, the symbol being attached to the commodity moved within a predetermined readable area provided in the upper part of the first support (25),
wherein the receivable area and the readable area overlap each other at least partially, and
a controller (100);
**characterized in that** the controller (100) is configured to execute a sales registration processing of the commodity based on the first commodity identification information at the time when
the wireless tag receiver (30) receives the first commodity identification information and
the code reader reads the second commodity identification information of the same commodity.

2. The apparatus according to Claim 1, further comprising:
a second support (26) configured to support the commodity that passed through the receivable area and provided on a side opposite to the first support, the first support (25) and the second support (26) sandwiching the wireless tag receiver (30).

3. The apparatus according to any of Claims 1 or 2,
wherein the wireless tag receiver (30) is configured to receive the first commodity identification information from the wireless tag attached to the commodity for which an operation for reading the second commodity identification information from the code reader is performed.

4. The apparatus according to any of Claims 1 to 3, further comprising a controller, wherein when the controller determines that the second commodity identification information was read by the code reader and the first commodity identification information was not received by the wireless tag receiver, the controller is configured to perform sales registration processing based on the second commodity identification information read by the code reader.

5. The apparatus according to any of Claims 1 to 4, further comprising a controller (100) , wherein when the controller (100) determines that the first commodity identification information was received by the wireless tag receiver, the controller is configured to perform sales registration processing based on the first commodity identification information received by the wireless tag receiver (30).

6. A method of operating a commodity information reading apparatus including a first support (25) configured to support a commodity to be read, and a wireless tag receiver (30) located at an upper part of the first support (25), and including an antenna configured to transmit and receive a signal, the method comprising:
receiving, via the wireless tag receiver, first commodity identification information identifying the commodity from a wireless tag that responds to the signal transmitted from the antenna, the wireless tag being attached to the commodity moved within a predetermined receivable area provided in the upper part of the first support,
reading, via a code reader (23) provided in a vicinity of the wireless tag receiver, second commodity identification information identifying the commodity from a symbol, the symbol being attached to the commodity moved within a predetermined readable area provided in the upper part of the first support (25),
wherein the receivable area and the readable area overlap each other at least partially,
the method being **characterized by** further comprising:
executing a sales registration processing of the commodity based on the first commodity identification information at the time when
the wireless tag receiver receives the first commodity identification information and
the code reader reads the second commodity identification information of the same commodity.

7. The method according to Claim 6, wherein the commodity information reading apparatus further comprises a second support (26) configured to support the commodity that passed through the receivable area and provided on a side opposite to the first support (25), the first support (25) and the second support (26) sandwiching the wireless tag receiver (30).

8. The method according to any of Claims 6 or 7, further comprising receiving, via the wireless tag receiver, the first commodity identification information from the wireless tag attached to the commodity for which an operation for reading the second commodity identification information from the code reader is performed.

9. The method according to any of Claims 6 to 8, further comprising, when it is determined that the second commodity identification information was read by the code reader and the first commodity identification information was not received by the wireless tag receiver, performing sales registration processing based on the second commodity identification information read by the code reader.

10. The method according to any of Claims 6 to 9, further comprising, when it is determined that the first commodity identification information was received by the wireless tag receiver, performing sales registration processing based on the first commodity identification information received by the wireless tag receiver.

## Patentansprüche

1. Wareninformationsleseeinrichtung, umfassend:
einen ersten Träger (25), der konfiguriert ist, eine zu lesende Ware zu tragen; und
einen drahtlosen Etikettenempfänger (30), der an einem oberen Teil des ersten Trägers liegt und eine Antenne beinhaltet, die konfiguriert ist, ein Signal zu senden und zu empfangen,
wobei der drahtlose Etikettenempfänger (30) konfiguriert ist, erste Warenkennungsinformationen zu empfangen, die die Ware anhand eines drahtlosen Etiketts identifizieren, das auf das Signal reagiert, das von der Antenne gesendet wird, wobei das drahtlose Etikett an der Ware befestigt ist, die innerhalb eines vorgegebenen empfangbaren Bereichs bewegt wird, der im oberen Teil des ersten Trägers (25) bereitgestellt ist,
einen Codeleser (23), der in einer Nähe des drahtlosen Etikettenempfängers (30) bereitgestellt ist und konfiguriert ist, zweite Warenkennungsinformationen zu lesen, die die Ware anhand eines Symbols identifizieren, wobei das Symbol an der Ware befestigt ist, die innerhalb eines vorgegebenen lesbaren Bereichs bewegt wird, der im oberen Teil des ersten Trägers (25) bereitgestellt ist,
wobei der empfangbare Bereich und der lesbare Bereich einander mindestens teilweise überlappen, und
eine Steuereinheit (100);
**dadurch gekennzeichnet, dass** die Steuereinheit (100) konfiguriert ist, eine Verkaufsregistrierungsverarbeitung der Ware basierend auf den ersten Warenkennungsinformationen zu der Zeit auszuführen, wenn der drahtlose Etikettenempfänger (30) die ersten Warenkennungsinformationen empfängt und der Codeleser die zweiten Warenkennungsinformationen derselben Ware liest.

2. Einrichtung nach Anspruch 1, weiter umfassend:
einen zweiten Träger (26), der konfiguriert ist, die Ware zu tragen, die durch den aufnehmbaren Bereich geleitet wird und an einer Seite gegenüber dem ersten Träger bereitgestellt ist, wobei der erste Träger (25) und der zweite Träger (26) den drahtlosen Etikettenempfänger (30) dazwischen aufnehmen.

3. Einrichtung nach einem der Ansprüche 1 oder 2,
wobei der drahtlose Etikettenempfänger (30) konfiguriert ist, die ersten Warenkennungsinformationen von dem drahtlosen Etikett zu empfangen, das an der Ware befestigt ist, für das ein Betrieb zum Lesen der zweiten Warenkennungsinformationen vom Codeleser durchgeführt wird.

4. Einrichtung nach einem der Ansprüche 1 bis 3, weiter umfassend eine Steuereinheit, wobei, wenn die Steuereinheit ermittelt, dass die zweiten Warenkennungsinformationen von dem Codeleser gelesen wurden und die ersten Warenkennungsinformationen nicht von dem drahtlosen Etikettenempfänger empfangen wurden, die Steuereinheit konfiguriert ist, Verkaufsregistrierungsverarbeitung basierend auf den zweiten Warenkennungsinformationen durchzuführen, die vom Codeleser gelesen werden.

5. Einrichtung nach einem der Ansprüche 1 bis 4, weiter umfassend eine Steuereinheit (100), wobei, wenn die Steuereinheit (100) ermittelt, dass die ersten Warenkennungsinformationen von dem drahtlosen Etikettenempfänger empfangen wurden, die Steuereinheit konfiguriert ist, Verkaufsregistrierungsverarbeitung basierend auf den ersten Warenkennungsinformationen durchzuführen, die von dem drahtlosen Etikettenempfänger (30) empfangen werden.

6. Verfahren zum Betreiben einer Wareninformationslesevorrichtung, die einen ersten Träger (25), der konfiguriert ist, eine zu lesende Ware zu tragen, und einen drahtlosen Etikettenempfänger (30), der an einem oberen Teil des ersten Trägers (25) liegt, beinhaltet und eine Antenne beinhaltet, die konfiguriert ist, ein Signal zu senden und zu empfangen, wobei das Verfahren umfasst:
Empfangen, über den drahtlosen Etikettenempfänger, erster Warenkennungsinformationen, die die Ware anhand eines drahtlosen Etiketts identifizieren, das auf das Signal antwortet, das von der Antenne gesendet wird, wobei das drahtlose Etikett an der Ware befestigt ist, die innerhalb eines vorgegebenen empfangbaren Bereichs bewegt wird, der im oberen Teil des ersten Trägers bereitgestellt ist,
Lesen, über einen Codeleser (23), der in einer Nähe des drahtlosen Etikettenempfängers bereitgestellt ist, zweiter Warenkennungsinformationen, die die Ware anhand eines Symbols identifizieren, wobei das Symbol an der Ware befestigt ist, die sich innerhalb eines vorgegebenen lesbaren Bereichs bewegt, der im oberen Teil des ersten Trägers (25) bereitgestellt ist,
wobei der empfangbare Bereich und der lesbare Bereich einander mindestens teilweise überlappen,
wobei das Verfahren **dadurch gekennzeichnet ist, dass** es weiter umfasst:
Ausführen einer Verkaufsregistrierungsverarbeitung der Ware, basierend auf den ersten Warenkennungsinformationen zu der Zeit, wenn der drahtlose Etikettenempfänger die ersten Warenkennungsinformationen empfängt und der Codeleser die zweiten Warenkennungsinformationen derselben Ware liest.

7. Verfahren nach Anspruch 6, wobei die Wareninformationsleseeinrichtung weiter einen zweiten Träger (26) umfasst, der konfiguriert ist, die Ware zu tragen, die durch den empfangbaren Bereich geleitet wird und an einer Seite gegenüber dem ersten Trägers (25) bereitgestellt ist, wobei der erste Träger (25) und der zweite Träger (26) den drahtlosen Etikettenempfänger (30) dazwischen aufnehmen.

8. Verfahren nach einem der Ansprüche 6 oder 7, weiter umfassend Empfangen, über den drahtlosen Etikettenempfänger, der ersten Warenkennungsinformationen von dem drahtlosen Etikett, das an der Ware befestigt ist, für die ein Betrieb zum Lesen der zweiten Warenkennungsinformationen von dem Codeleser durchgeführt wird.

9. Verfahren nach einem der Ansprüche 6 bis 8, weiter umfassend, wenn ermittelt wird, dass die zweiten Warenkennungsinformationen von dem Codeleser gelesen wurden und die ersten Warenkennungsinformationen nicht von dem drahtlosen Etikettenempfänger empfangen wurden, Durchführen von Verkaufsregistrierungsverarbeitung, basierend auf den zweiten Warenkennungsinformationen, die von dem Codeleser gelesen werden.

10. Verfahren nach einem der Ansprüche 6 bis 9, weiter umfassend, wenn ermittelt wird, dass die ersten Warenkennungsinformationen von dem drahtlosen Etikettenempfänger empfangen wurden, Durchführen von Verkaufsregistrierungsverarbeitung, basierend auf den ersten Warenkennungsinformationen, die von dem drahtlosen Etikettenempfänger empfangen werden.

## Revendications

1. Appareil de lecture d'informations sur des marchandises comprenant :
un premier support (25) configuré pour supporter des marchandises à lire ; et
un récepteur d'étiquette sans fil (30) situé au niveau d'une partie supérieure du premier support et incluant une antenne configurée pour émettre et recevoir un signal,
le récepteur d'étiquette sans fil (30) étant configuré pour recevoir
des premières informations d'identification de marchandises, identifiant les marchandises, en provenance d'une étiquette sans fil qui répond au signal émis à partir de l'antenne, l'étiquette sans fil étant attachée aux marchandises déplacées à l'intérieur d'une zone de réception possible prédéterminée prévue dans la partie supérieure du premier support (25),
un lecteur de code (23) prévu à proximité du récepteur d'étiquette sans fil (30) et configuré pour lire des secondes informations d'identification de marchandises identifiant les marchandises à partir d'un symbole, le symbole étant attaché aux marchandises déplacées à l'intérieur d'une zone lisible prédéterminée prévue dans la partie supérieure du premier support (25),
dans lequel la zone de réception possible et la zone lisible se chevauchent au moins partiellement, et
une unité de commande (100) ;
**caractérisé en ce que** l'unité de commande (100) est configurée pour exécuter un traitement d'enregistrement de ventes des marchandises sur la base des premières informations d'identification de marchandises à l'instant où le récepteur d'étiquette sans fil (30) reçoit les premières informations d'identification de marchandises et où le lecteur de code lit les secondes informations d'identification de marchandises des mêmes marchandises.

2. Appareil selon la revendication 1, comprenant en outre :
un second support (26) configuré pour supporter les marchandises qui sont passées par la zone de réception possible et prévu sur un côté opposé au premier support, le premier support (25) et le second support (26) prenant en sandwich le récepteur d'étiquette sans fil (30).

3. Appareil selon l'une quelconque des revendications 1 ou 2,
dans lequel le récepteur d'étiquette sans fil (30) est configuré pour recevoir les premières informations d'identification de marchandises en provenance de l'étiquette sans fil attachée aux marchandises pour lesquelles une opération de lecture des secondes informations d'identification de marchandises à partir du lecteur de code est effectuée.

4. Appareil selon l'une quelconque des revendications 1 à 3, comprenant en outre une unité de commande, dans lequel lorsque l'unité de commande détermine que les secondes informations d'identification de marchandises ont été lues par le lecteur de code et que les premières informations d'identification de marchandises n'ont pas été reçues par le récepteur d'étiquette sans fil, l'unité de commande est configurée pour effectuer un traitement d'enregistrement de ventes sur la base des secondes informations d'identification de marchandises lues par le lecteur de code.

5. Appareil selon l'une quelconque des revendications 1 à 4, comprenant en outre une unité de commande (100), dans lequel lorsque l'unité de commande (100) détermine que les premières informations d'identification de marchandises ont été reçues par le récepteur d'étiquette sans fil, l'unité de commande est configurée pour effectuer un traitement d'enregistrement de ventes sur la base des premières informations d'identification de marchandises reçues par le récepteur d'étiquette sans fil (30).

6. Procédé de mise en œuvre d'un appareil de lecture d'informations sur des marchandises incluant un premier support (25) configuré pour supporter des marchandises à lire, et un récepteur d'étiquette sans fil (30) situé au niveau d'une partie supérieure du premier support (25), et incluant une antenne configurée pour émettre et recevoir un signal, le procédé comprenant :
la réception, via le récepteur d'étiquette sans fil, de premières informations d'identification de marchandises identifiant les marchandises en provenance d'une étiquette sans fil qui répond au signal émis à partir de l'antenne, l'étiquette sans fil étant attachée aux marchandises déplacées à l'intérieur d'une zone de réception possible prédéterminée prévue dans la partie supérieure du premier support,
la lecture, via un lecteur de code (23) prévu à proximité du récepteur d'étiquette sans fil, de secondes informations d'identification de marchandises identifiant les marchandises à partir d'un symbole, le symbole étant attaché aux marchandises déplacées à l'intérieur d'une zone lisible prédéterminée prévue dans la partie supérieure du premier support (25),
dans lequel la zone de réception possible et la zone lisible se chevauchent au moins partiellement,
le procédé étant caractérisé comme comprenant en outre :
l'exécution d'un traitement d'enregistrement de ventes des marchandises sur la base des premières informations d'identification de marchandises à l'instant où le récepteur d'étiquette sans fil reçoit les premières informations d'identification de marchandises et où le lecteur de code lit les secondes informations d'identification de marchandises des mêmes marchandises.

7. Procédé selon la revendication 6, dans lequel l'appareil de lecture d'informations sur des marchandises comprend en outre un second support (26) configuré pour supporter les marchandises qui sont passées par la zone de réception possible et prévu sur un côté opposé au premier support (25), le premier support (25) et le second support (26) prenant en sandwich le récepteur d'étiquette sans fil (30).

8. Procédé selon l'une quelconque des revendications 6 ou 7, comprenant en outre la réception, via le récepteur d'étiquette sans fil, des premières informations d'identification de marchandises en provenance de l'étiquette sans fil attachée aux marchandises pour lesquelles une opération de lecture des secondes informations d'identification de marchandises à partir du lecteur de code est effectuée.

9. Procédé selon l'une quelconque des revendications 6 à 8, comprenant en outre, quand il est déterminé que les secondes informations d'identification de marchandises ont été lues par le lecteur de code et que les premières informations d'identification de marchandises n'ont pas été reçues par le récepteur d'étiquette sans fil, l'exécution d'un traitement d'enregistrement de ventes sur la base des secondes informations d'identification de marchandises lues par le lecteur de code.

10. Procédé selon l'une quelconque des revendications 6 à 9, comprenant en outre, quand il est déterminé que les premières informations d'identification de marchandises ont été reçues par le récepteur d'étiquette sans fil, l'exécution d'un traitement d'enregistrement de ventes sur la base des premières informations d'identification de marchandises reçues par le récepteur d'étiquette sans fil.
